# EUROPEAN PATENT SPECIFICATION

(11) **EP 2 629 356 B1**
(45) Date of publication and mention of the grant of the patent: **17.02.2016**
(21) Application number: 12001047.5
(22) Date of filing: 17.02.2012
(51) Int. Cl.: H01M 10/0565, B01D 71/26, B01D 71/38, B01D 71/42, C08K 5/109

(54) **Printed electronics available through depositing a layer of a composite solid polymer electrolyte and use of a composite solid polymer electrolyte for printing electronics**
Gedruckte Elektronik hergestellt durch Abscheiden eines festen Verbundpolymerelektrolyts und Verwendung eines festen Verbundpolymerelektrolyts zum Drucken von Elektronik
Appareils électroniques imprimés fabriqués par déposition d'un électolyte polymère solide composite et utilisation d'un électrolyte polymère solide composite pour fabrication des appareils électroniques imprimés

(43) Date of publication of application: 21.08.2013
(73) Proprietor: Karlsruher Institut für Technologie, 76131 Karlsruhe (DE)
(72) Inventor: Hahn, Horst, 64342 Seeheim-Jugenheim (DE); Dasgupta, Subho, 76344 Eggenstein-Leopoldshafen (DE); Stösser, Anna, 76297 Stutensee (DE)
(74) Representative: Gärtner, Stephan

(56) References cited:
- EP-A2- 0 893 836
- EP-A2- 1 035 611
- US-A1- 2001 019 796
- JEONG HO CHO ET AL: "Printable ion-gel gate dielectrics for low-voltage polymer thin-film transistors on plastic", NATURE MATERIALS, NATURE PUBLISHING GROUP, LONDON, GB, vol. 7, 1 November 2008 (2008-11-01), pages 900-907, XP007910676, ISSN: 1476-4660, DOI: 10.1038/NMAT2291 [retrieved on 2008-10-19]
- MAHIAR HAMEDI ET AL: "Fiber-Embedded Electrolyte-Gated Field-Effect Transistors for e-Textiles", ADVANCED MATERIALS, vol. 21, no. 5, 2 February 2009 (2009-02-02), pages 573-577, XP055001894, ISSN: 0935-9648, DOI: 10.1002/adma.200802681

## Description

The present invention relates to printed electronics according to claims 10 to 13, available through deposition of a layer of a composite solid polymer electrolyte and the use of a composite solid polymer electrolyte for printing electronics according to claims 1 to 9. The printed electronics include but are not limited to logics, circuits, transistors, capacitors, and any other devices.

Electrochemical gating is for example used in combination with various kinds of semiconducting materials to obtain gate-modulated conductivity in a device which is usually known as a field-effect transistor (FET). It would be rather desirous to produce such devices by printing thin layers, i.e. layers with a thickness from 10 nm to 10 µm, preferably from 50 nm to 5 µm, of an electrolyte (dielectric) since thick dielectrics usually make the FETs slow.

To gate carbon materials like carbon nanotubes (CNTs) and graphene, a solid polymer electrolyte which comprises polyethylene oxide (PEO) and lithium perchlorate (LiClO₄) has been used by [1]-[3]. However, this electrolyte does not show high conductivity and is therefore not sufficient when high speed of a transistor device is required. In addition, it is not clear at all from [1]-[3] whether this electrolyte would be easily printable in the form of thin layers.

For producing electronics with organic semiconductors, polycationic (poly[(1-vinylpyrrolidone)-co-(2-ethyldimethylammo-nioethyl methacrylate ethyl sulfate)] (P(VP-EDMAEMAES)) and polyanionic (poly[(vinyl phosphonic acid)-co-(acrylicacid)] (P(VPA-AA)) electrolytes and insulators were spin coated in [4]. This group of electrolytes, which are called *poly-electrolytes,* is to some extent an ideal gate insulator similar to oxide-gate dielectrics since in these electrolytes, one ion, either the cation or the anion, is mobile and the other ion is trapped within the polymer. However, these materials are not readily available, large scale synthesis may be difficult and expensive, and, furthermore, it is not clear at all whether they would be easily printable in thin layers.

In [5]-[8] electrolytes called *ion-gels,* which are a combination of an ionic liquid, e.g. (1-ethyl-3-methylimidazolium bis(trifluoromethylsulfonyl)imide, [EMIM][TFSI]), and a triblock-copolymer, e.g. PS-PEO-PS, are used to gate organic semiconductors and CNTs. Ion-gels are printable with an ink-jet into layers which are 10 µm thick. However, ionic liquids are expensive and it is challenging to print thinner layers.

In [9], [10], and WO 2009/036856 A1, devices with an ink-jet printed composite solid polymer electrolyte, which is a combination of a synthetic polymer (polyvinyl alcohol, PVA), a non-adsorptive-type supporting electrolyte, i.e. salt (potassium fluoride, KF) and water (H₂O), have been used. However, the surface tension and the viscosity of the ink did not possess the right values so that printing was not easy. Since the boiling point (b. p.) of water is very low and the vapour pressure at room temperature is extremely high (∼2660 Pa), the ink tends to dry within the nozzles. In addition, the conductivity of the electrolyte depends on the remaining water content which is a function of relative humidity (RH). Hence, at higher RH the electrolyte conductivity is higher and at very low or zero RH, the electrolyte nearly looses most of its water and becomes much less conducting, quite similar to [1-3]. This means that the electrolyte performance varies with RH in the air which is absolutely not desired for the stability and long-term reproducibility of devices prepared with such electrolytes. Also, the electrolytes used in [9] and [10] are not transparent.

Finally, potassium fluoride (KF) is a toxic salt and may cause fluoride poisoning Already for small intakes in human bodies.

Therefore, a composite solid polymer electrolyte based on a non-aqueous solvent seems to be the requirement in order to achieve an electrolyte whose conductivity does not depend on the relative humidity.

In [11] acetonitrile (AC) was used as a solvent to dissolve a polymer which is not suitable for printing. Due to the low b. p. and the very high vapour pressure of AC, the liquid electrolyte would dry very fast within the printer thus disabling ink-jet printing. Furthermore, H₃PO₄, which is used as a supporting electrolyte, is disadvantageous because it adsorbs very easily to an electrode, hence is not useful in an electrolyte which is intended to be used for electrostatic doping with minimal chemical reaction at the electrode surafe.

In [12] tetrahydrofuran (THF) is used as a solvent which is not suitable for printing since THF is low boiling (60 °C) and exhibits a very high vapour pressure already at RT. As a result, the liquid electrolyte will dry very fast within the printer nozzles, thus disabling ink-jet printing.

The main object of the present invention is therefore to provide a composite solid polymer electrolyte, which overcomes the limitations known from the state of the art.

In particular, it is an object of the invention to provide a composite solid polymer electrolyte which is particularly suited for printing electronics, preferably for printing with an ink-jet printer. Therefore, the fluid properties of the electrolyte forming printable ink should lie within a narrow window in which ink-jet printing is possible and easy.

In addition, the electrolyte should exhibit high conductivity, high polarizability, i.e. high double layer capacitance, and should be stable under ambient conditions, preferably over a large period of time. Preferably, all components of the electrolyte should be easily available, inexpensive, environment-friendly and non-toxic.

Another object of the present invention is therefore to provide printed electronics with thin electrolyte layers in order to achieve a rather low electrolyte resistance.

Preferably, it would be advantageous if such a thin electrolyte layer would exhibit high transparency in order to realize highly transparent electronic devices.

According to the present invention, a composite solid polymer electrolyte is provided, which comprises the following composition:
- a polymer, preferably polyvinyl alcohol (PVA), polyethylene oxide (PEO), polyvinyl chloride (PVC), poly(methyl methacrylate) (PMMA), or polyacrylonitrile (PAN), or a mixture thereof;
- a plasticizer, preferably propylene carbonate (PC), ethylene carbonate (EC), dimethyl carbonate (DMC), ethylene glycol (EG), diethylene glycol (DEG), polyethylene glycol (PEG), pro pylene glycol (PG), or a mixture thereof;
- a supporting electrolyte (salt), which is preferably non-adsorbing type and preferably possesses K⁺, Na⁺, Li⁺, H⁺, Et₄N⁺, and Bt₄N⁺ as a cation, where Et means ethyl and Bt means butyl, and PF₆⁻, BF₄⁻, CLO₄⁻ as a anion, or a mixture thereof; and
- a non- aqueous solvent with the capability to dissolve the other components; preferably dimethyl sulfoxide (DMSO), n-methyl formamide (NMF), or dimethyl formamide (DMF) or a mixture thereof.

With regard to the polymer, it has been explicitly shown that polyvinyl alcohol (PVA) works very well, but polyethylene oxide (PEO), polyvinyl chloride (PVC), poly(methylmethacrylate) (PMMA), polyacrylonitrile (PAN) or any mixtures thereof, can preferably be also applied.

With regard to the plasticizer, which helps to form a high quality polymeric gel, propylene carbonate (PC) has explicitly proved to be suitable, however, alternatively or additionally ethylene carbonate (EC), dimethyl carbonate (DMC), ethylene glycol (EG), diethylene glycol (DEG), polyethylene glycol (PEG), or propylene glycol (PG) can preferably also be used. PC has a high boiling point, the vapour pressure of PC at RT is only 4 Pa, the viscosity is 0.0028 Pa·s, and its permittivity is 65. Therefore, it makes the electrolyte adequately viscous, the electrolyte does not dry inside the printer nozzles, thus making it extremely easy to print, and also the dried electrolyte stays stable with its performance for a long time. A high dielectric constant also helps to provide a large double layer capacitance and polarizability.

In a preferred embodiment ethylene carbonate (EC) is added to the electrolyte which is helpful to tune the viscosity of the ink without deteriorating the electrolyte properties. The addition of a small amount of ethylene glycol (EG) helps to increase the viscosity further so that the ink dries slower as EG exhibits a high viscosity in the range of 0.03-0.05 Pa·s and at RT vapour pressure is below 0.133 Pa. Glycols added to the electrolyte can increase the long-term stability, however, their addition may decrease the ion polarizability and conductivity.

With regard to the salt, LiClO₄ and NaClO₄ have been successfully applied. But other non-adsorbing salts, including but not limited to HClO₄, KClO₄, Et₄NPF₆, Bt₄NPF₆, Et₄NBF₄, Bt₄NBF₄, can also be applied. However, when it is required that the salt should be dissolvable in the plasticizer PC or EC, a highly non-adsorbing salt, such as LiF, NaF, KF cannot be used. Notably, the mentioned usable salts are non-toxic. The reason why the supporting electrolyte (salts) is preferably of the non-adsorptive type is to ensure that at the electrode/electrolyte interface not an electrochemical doping/redox reaction but rather an electrostatic field effect occurs.

Lastly, a non-aqueous solvent is required to dissolve the mentioned components. The preferred solvent is dimethyl sulfoxide (DMSO) since it exhibits a sufficiently high b. p. (189 °C), its viscosity (∼0.002 Pa·s) is nit too low and its vapour pressure (∼66 Pa) at RT is not too high; the permittivity is also relatively high (46) which is necessary for a high polarizability, and it is nontoxic (Rats LD₅₀ above 10 g/kg). DMSO does not dry easily inside the printer nozzles but dries within a finite time when printed.

But other suitable non-aqueous solvents, such as n-methyl formamide (NMF) or di-methyl formamide (DMF) can be used in addition to or by replacing DMSO in order to tune the drying time. NMF has a very high permittivity of 189; however, for formamides the health ratings are generally higher. Nevertheless, most of the solvent is expected to be evaporated during drying of the printed structures and hence most of it will not remain in the final product. The advantage of the electrolyte presented here is that it meets all the requirements stated above.

Another aspect of the invention concerns printed electronics by means of said composite solid polymer electrolyte working as a dielectric, in particular, through depositing a layer of said composite solid polymer electrolyte, more particular, through depositing said layer by means of a suitable ink-jet.

In a preferred embodiment, the printed electronics with said dielectric comprises a layer of electrolyte which is from 10 nm to 10 µm, preferably from 50 nm to 5 µm thick.

Summarizing, the synthesis, characterization and usefulness of a composite solid polymer electrolyte which consists of a polymer, a plasticizer, a preferably non-adsorbing type supporting electrolyte (salt) and a non-aqueous solvent have been demonstrated. Such a composite solid polymer electrolyte is useful for printed transistors, capacitors, other logics or electronic circuits, when it meets the following criteria. In order to obtain best results with ink-jet printing, the fluid dynamic properties, in particular the surface tension and the viscosity, of the electrolyte should fall within a certain window of values. Since the composite solid polymer electrolyte is applied to replace the dielectric of a field-effect transistor (FET) device, it is important to choose a non-adsorptive type supporting electrolyte (salt) in order to ensure predominantly electrostatic field-effect and absent or at least negligible chemical effects, particularly through surface adsorption on the electrodes.

The preferred composite solid polymer electrolyte which has been prepared meets all the fluid properties required for easy, free-flow printability with an ink-jet printer without nozzle clogging, shows high polarizability, high conductivity which is adequate for its use as a dielectric in transistor applications, and shows long lifetime at ambient conditions, i.e. no loss/change in polarizability over months. Additionally, the electrolyte is more than 90% transparent in the optical wavelength region and the thickness of the printed layers can easily be brought down to less than 100 nm and can easily be tuned with varying the amount of solvent with respect to the other constituents. As a result, the easy-to-print composite solid polymer electrolyte family is suitable for applications in low voltage, battery compatible, flexible, bendable, transparent, printed electronics.

The present invention will be more apparent from the following description of non-limiting specific embodiments with reference to the drawings.
**Fig. 1** shows the transmittance of a couple of 150 µm thick membranes which is plotted with respect to the wavelength of the incident radiation.
**Fig. 2** exhibits a cyclovoltammogram of an ITO/electrolyte/ITO capacitor measured with a scan rate of 10 mV/s and for a potential window of ± 100 mV as prepared (dashed line) and after one month (full line), respectively.
**Fig. 3** displays the viscosity vs. the shear rate of the electrolyte with a composition according to Sample 1.

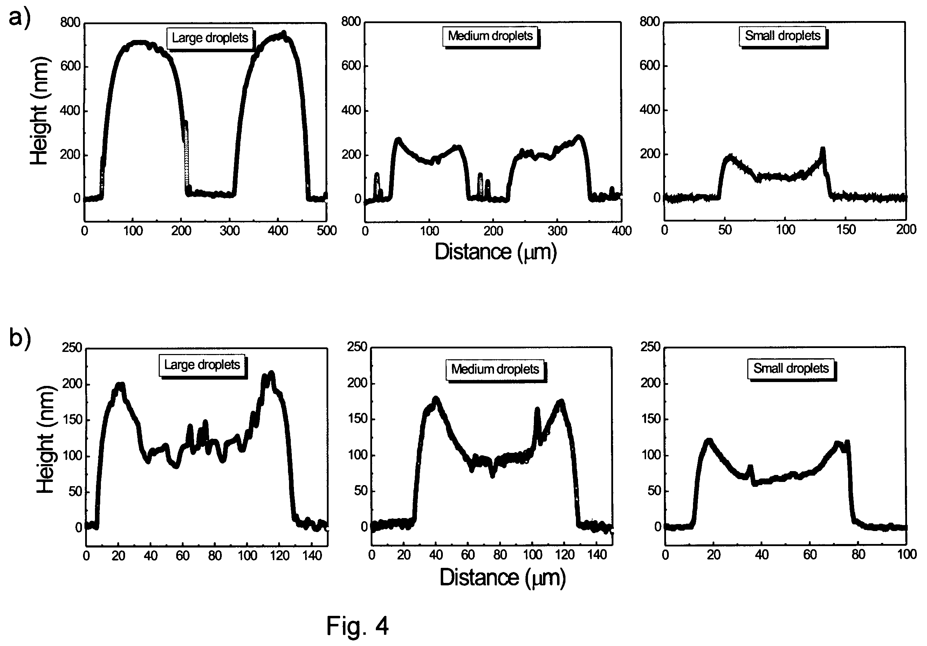

**Fig. 4** shows a profilometry scan with a stylus profilometer on several sizes of printed droplets; the small droplets in **(a)** were printed with then electrolyte with a composition according to Sample 1; the small, the medium and the large-sized droplets shown in **(b)** have five times more DMSO content.
**Fig. 5** displays a Nyquist plot of an ITO/composite solid polymer electrolyte/ITO parallel plate capacitor.

### Synthesis of the composite solid polymer electrolyte

The polymer polyvinyl alcohol (PVA), average mol. wt. 13.000-23.000, 98% hydrolyzed, the plasticizer propylene carbonate (PC), anhydrous, the salt lithium perchlorate (LiClO₄), anhydrous, or sodium perchlorate (NaClO₄), anhydrous, and the solvent dimethylsulfoxide (DMSO). anhydrous, were used for the preparation of composite solid polymer electrolytes without further purification. A number of compositions with different relative concentrations of the above mentioned ingredients were prepared and the following preferred concentration ranges were found:
- High viscosity of the electrolyte in order to be easily printable with an ink-jet;
- Minimum possible polymer content for the highest possible conductivity, keeping in mind, at the same time, the electrolyte when printed or solution-cast should dry completely within a few seconds to a few days, respectively, depending on the volume; and
- High concentration of the salt with respect to the added plasticizer, considering that most of the DMSO would evaporate during the drying process.

In case of a very low concentration of PVA, the electrolyte was not completely dry when a large amount (5 ml) is cast on a Petri dish, whereas a higher concentration of PVA increased the viscosity and the drying speed but resulted in a lower conductivity.

On the other hand, the amount of solvent can be varied within a large value range without a large change in the dried electrolyte morphology and properties, at the end; however, it is preferably kept in the range of 60-95 % of the total weight considering all other components in order to ensure easy printability.

Therefore, an amount of the composite solid polymer electrolyte was prepared in the following manner: First, 0.75 g PVA was added to 15 g DMSO, and the solution was then stirred and heated continuously at 80-100 °C for several hours until the mixture became a homogeneous sol. 0.175 g of the salt lithium or sodium perchlorate was then dissolved in 1.575 g of PC and added to the PVA solution. The complete mixture as then stirred at RT for at least 12-24 hours to obtain a completely single phase, i.e. a clear and homogeneous solution (liquid electrolyte) which was then used as starting material for casting the composite solid polymer electrolyte. Various volumes of this liquid electrolyte were used for casting different types of electrochemical cells and for printing with an ink-jet. The electrolyte was filtered through a 450 nm PTFE membrane prior to loading the cartridge for printing. For transmittance measurements, 2 ml of the electrolyte was cast in a plastic Petri dish and dried in air at RT for about 3-4 days in order to obtain completely dried membranes. Virtually all of the solvent DMSO was evaporated within this drying process.

**Table 1: Prepared samples**

| Sample | PVA, g (wt%) | PC, g (wt%) | Salt, g (wt%) | DMSO, g (wt%) | Comment |
|---|---|---|---|---|---|
| 1 | 0.75 (4.3) | 1.575 (9) | 0.175 (1) | 15 (85.7) | Standard one, used in all measurements |
| 2 | 1 (8) | 1.25 (10) | 0.25 (2) | 10 (80) | Filtration and printing was difficult due to less amount of DMSO and high amount of salt with respect to PC |
| 3 | 1 (3.1) | 1.25 (3.8) | 0.25 (0.8) | 30 (92.3) | Higher amount of polymer and lower amount of PC; immediately forms a highly viscous gel after mixing and dries very rapidly when cast. Again difficult to filter and print. Lower conductivity and polarizability than Sample 1. |
| 4 | 0.5 (1.5) | 1.75 (5.4) | 0.25 (0.8) | 30 (92.3) | Larger amount of PC and less amount of PVA. The few milliliter cells stay liquid for very long time, hard to get them dried at RT. A little elevated temperature helps it to dry quickly; also it dries much faster if amount is low. That means it is difficult to dry a few milliliter cells but printed droplets dry within a few minutes. |

The respective components behave in the following manner:
**PVA:** A larger amount of PVA would mean thicker printed layers and a decrease in conductivity whereas too little may makes it difficult to end up with a solid electrolyte and not a semisolid or a gel form.
**PC:** A higher content improves the ability to dissolve extra salt; however, the electrolyte becomes difficult to dry. But drying of thin printed layer may still be possible. In fact, it is possible to control the drying time of a printed layer by varying the amount of PC.
**Salt:** Generally, a higher amount of salt results in an increase in conductivity. However, after a certain value is reached, it is difficult to dissolve more salt in PC and in the polymer which means that it will crystallize and may create problems during printing.
**DMSO:** The viscosity and the printability of the electrolyte can be controlled with the amount of DMSO. Too little DMSO means difficulties in printing due to too high viscosity. However, since this behavior varies for different ink-jet systems and different printing nozzle diameters, one needs to be cautious to state the lower limit of DMSO content with which the electrolyte is still printable.

As a result, the preferred composition of the composite solid polymer electrolyte for the purposes of ink-jet-printing is presented in **Table 2.**

**Table 2: Preferred compositions**

| Range | PVA (wt%) | PC (wt%) | Salt (wt%) | DMSO (wt%) |
|---|---|---|---|---|
| Reasonable | 0.59-20 | 1.4-31.5 | 0.01-3.5 | 45-98 |
| Preferred | 1.7-15 | 3.2-22.5 | 0.1-2.5 | 60-95 |
| Most preferred | 2.5-5.5 | 7-13 | 0.5-1.5 | 80-90 |

### Physical nature and optical transparency

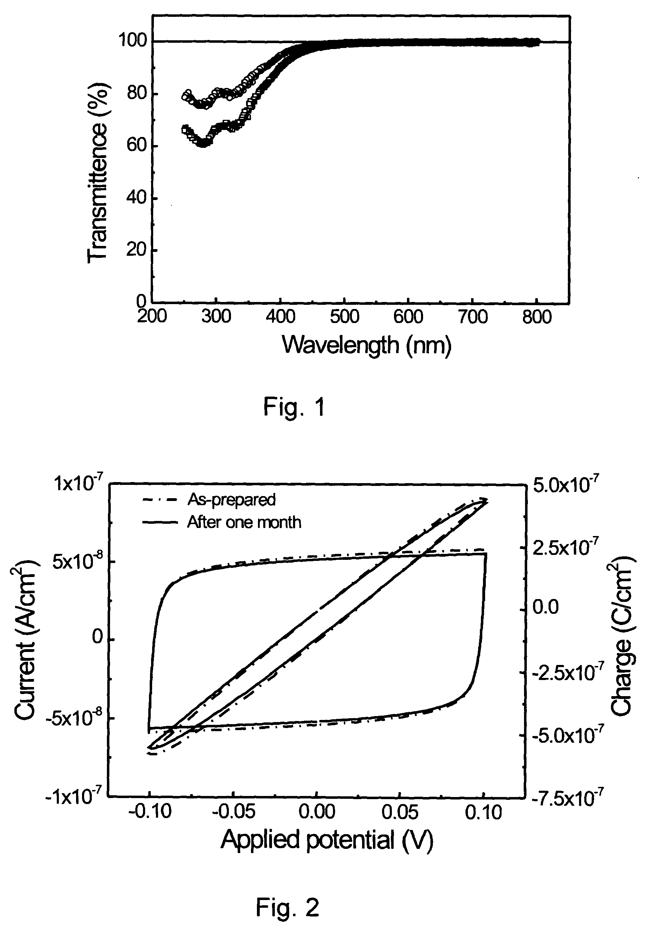

For the preferred concentration ranges it is also possible to quickly create a thick and mechanically stable electrolyte membrane if the solution is heated to a temperature just above RT. Since the drying time is a function of volume and thickness of the electrolyte, thicker membranes (∼20 µm thick) may dry at RT within several days whereas thinner printed layers (50 nm - 1 µm) may dry within a few seconds up to a few minutes. The optical transparency of dried membranes has been measured for a couple of thick layers (150 µm). **Fig. 1** shows a very high transmittance value above 90% in the visible range (380 nm - 800 nm) of the spectrum.

### Time-stability of the composite solid polymer electrolyte under ambient conditions

The composite solid polymer electrolyte was found to show a large polarizability with a double layer capacitance of 5 µF/cm² for Sn-doped indium oxide (ITO) electrodes as well as a long-term stability at ambient conditions. **Fig. 2** shows that a decrease of less than 3% percent polarization when an electrolyte membrane is kept at RT in air for a time period of a month. This is a very important observation in order to ensure the long-term stable performance of devices prepared with such electrolytes. The high b. p and low vapour pressure of PC at RT may be a reason for the observed stable performance of the electrolyte.

### Viscosity measurements

The viscosity of LiClO₄ and NaClO₄ based composite solid polymer electrolytes was measured for the preferred compositions and found that both behave like Newtonian fluids where the viscosity around a shear rate of 1000 S⁻¹ (usually the shear rate for ink-jet printers during printing) is around 0.016 Pa·s for both electrolytes with LiClO₄ and NaClO₄ as supporting electrolytes (salts). This high viscosity value along with a low evaporation rate of the solvent may be another reason for easy printability of the electrolyte. This viscosity value is already well-suited for several kinds of ink-jet printers; however, the viscosity can easily be lowered by increasing the relative amount of DMSO, which possess a viscosity of 0.002 Pa·s, in order to fit to the best viscosity window of commercial ink-jet printers which is in the range 0.01-0.012 Pa·s. Astonishingly, even an increase in the relative DMSO content by a factor of five does not reduce the printing performances of the composite solid polymer electrolyte and does not deteriorate the morphology of the resulted films or droplets.

### Easy Printability

The surface tension of the solvent dimethyl sulfoxide, DMSO (0.043 N·m⁻¹), is suitable for ink-jet printing and the viscosity of the electrolyte is very close to the best suited value. Moreover, the solvent and the plasticizer used have high b. p. and low VP at RT; hence the electrolyte does not easily dry within the cartridge nozzles. In fact, it has been observed that the nozzles of the cartridges stay open or unblocked when the cartridges are just left unattended for several days.

In contrast to ion-gels (see [5]-[8] above), this electrolyte can be printed extremely thin. Whereas examples for ink-jet printed ion-gels are around 10 µm thick, the composite solid polymer electrolyte can easily be printed with a thickness of between 10 nm and 500 nm. **Fig. 6a** and Fig. 6b show various printed droplet sizes with respective surface profile scans for electrolytes of a composition of [(PC:PVA:Li/NaClO₄):DMSO = 1:6] (Fig. 6a) and with five times higher amount of DMSO, i.e. [(PC:PVA:Li/NaClO₄):DMSO = 1:30] (Fig. 6b), respectively. It can be seen that the droplet height does not scale directly with the increase in DMSO content, possibly because a certain amount of DMSO is always left in the dried electrolyte and this may vary with different starting concentration, and more evidently the droplet size is observed to shrink with an increase in the amount of DMSO and hence the thickness of the printed layer did not decrease as expected. However, a thickness of a layer of the printed composite solid polymer electrolyte between 10 nm and 500 nm is important to build faster devices as the time constant of such a device is inversely proportional to the electrolyte resistance which in turn depends on the thickness of the electrolyte.

### Conductivity measurements

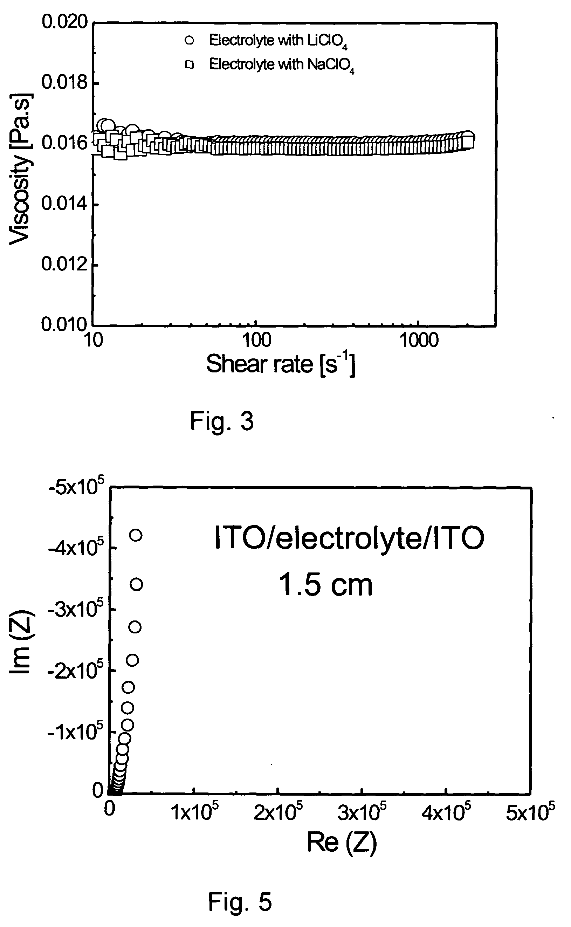

Conductivity of a composite solid polymer electrolyte is measured with parallel plate capacitor structures using Sn-doped indium oxide (ITO) electrode with an electrode surface area A of 0.05 cm2 and the distance d between the electrodes 1.5 cm. The impedance result is shown in the Nyquist plot in **Fig. 5****.**

The impedance data is fitted with a RC circuit to result a value of conductivity of the electrolyte 1.1×10⁻² S/cm. This value of conductivity is extremely high for a composite solid polymer electrolyte, however, it may be noted here that such high conductivity is extremely useful but not always required for the present invention.

### References

- [1]: G. P. Siddons, D. Merchin, J. H. Back, J. K. Jeong, M. Shim, Nano Lett., 4 (2004) 927
- [2]: T. Ozel, A. Gaur, J. A. Rogers, M. Shim, Nano Lett., 5 (2005) 905
- [3]: A. Das et al., Nat. Nanotechnol. 3 (2008) 210
- [4]: L. Herlogsson, X. Crispin, S. Tierney, M. Berggren, Adv. Mater. 23 (2011) 4684
- [5]: J. H. Cho, J. Lee, Y. Xia, B. Kim, Y. He, M. J. Renn, T. P. Lodge, C. D. Frisbie, Nature Materials, 7 (2008) 900
- [6]: J. Lee, M. J. Panzer, Y. He, T. P. Lodge, C. D. Frisbie, J. Am. Chem. Soc., 129 (2007) 4532
- [7]: K. H. Lee, S. Zhang, T. P. Lodge, C. D. Frisbie, J. Phys. Chem. B, 115 (2011) 3315
- [8]: M. Ha, Y. Xia, A. A. Green, W. Zhang, M. J. Renn, C. H. Kim, M. C. Hersam, C. D. Frisbie, ACS Nano, 4 (2010) 4388
- [9]: S. Dasgupta, S. Gottschalk, R. Kruk, H. Hahn, Nanotechnology, 23 (2008) 435203.
- [10]: S. Dasgupta, R. Kruk, N. Mechau, H. Hahn, ACS Nano, 10.1021/nn202992v
- [11]: B. -K. Choi, S. -H. Park, S. -W. Joo, M. -S. Gong, Electrochimica Acta 50 (2004) 649
- [12]: V. V. Shilov et al., IEEE Transactions on Dielectrics and Electrical Insulntion. 9 (2002) 551

## Claims

1. Use of a composite solid polymer electrolyte, comprising polyvinyl alcohol (PVA), a plasticizer, a salt and a non-aqueous solvent for printing electronics, wherein the plasticizer is propylene carbonate (PC), ethylene carbonate (EC), dimethyl carbonate (DMC), ethylene glycol (EG), diethylene glycol (DEG), polyethylene glycol (PEG), propylene glycol (PG), or a mixture thereof and the non-aqueous solvent is dimethyl sulfoxide (DMSO), n-methyl formamide (NMF), or dimethyl formamide (DMF).

2. Use of a composite solid polymer electrolyte according to the claim 1, wherein the salt comprises K⁺, Na⁺, Li⁺, H⁺, Et₄N⁺, and Bt₄N⁺, where Et means ethyl and Bt means butyl, as a cation and PF₆⁻, BF₄⁻, CLO₄⁻ as a anion, or a mixture thereof.

3. Use of a composite solid polymer electrolyte according to claim 1 or 2 with 0.59 to 20 wt% of PVA, 1.4 to31.5 wt% of PC, 0.01 to 3.5 wt% of the salt, and 45 to 98 wt% of DMSO.

4. Use of a composite solid polymer electrolyte according to claim 3 with 1.7 to 15 wt% of PVA, 3.2 to 22.5 wt% of PC, 0.1 to 2.5 wt% of the salt, and 60 to 95 wt% of DMSO.

5. Use of a composite solid polymer electrolyte according to claim 4 with 2.5 to 5.5 wt% of PVA, 7 to 13 wt% of PC, 0.5 to 1.5 wt% of the salt, and 80 to 90 wt% of DMSO.

6. Use of a composite solid polymer electrolyte according to one of the claims 1 to 5 which exhibits more than 90% optical transparency.

7. Use of a composite solid polymer electrolyte according to one of the claims 1 to 6 for printing dielectrics in low voltage, flexible, bendable, transparent, printed electronics.

8. Use of a composite solid polymer electrolyte according to one of the claims 1 to 7 for printing logics, circuits, transistors, and capacitors.

9. Use of a composite solid polymer electrolyte according to one of the claims 1 to 8 for printing with an ink-jet printer.

10. Printed electronics, available through depositing a layer of a composite solid polymer electrolyte comprising polyvinyl alcohol (PVA), a plasticizer, a salt and a non-aqueous solvent for printing electronics, wherein the plasticizer is propylene carbonate (PC), ethylene carbonate (EC), dimethyl carbonate (DMC), ethylene glycol (EG), diethylene glycol (DEG), polyethylene glycol (PEG), propylene glycol (PG), or a mixture thereof and the non-aqueous solvent is dimethyl sulfoxide (DMSO), n-methyl formamide (NMF), or dimethyl formamide (DMF).

11. Printed electronics according to claim 10, available through depositing a layer of the composite solid polymer electrolyte by means of an ink-jet.

12. Printed electronics according to claim 10 or 11, where the layer of the composite solid polymer electrolyte is from 10 nm to 10 µm thick.

13. Printed electronics according to claim 12, where the layer of the composite solid polymer electrolyte is from 50 nm to 5 µm thick.

## Patentansprüche

1. Verwendung eines festen Kompositpolymerelektrolyten umfassend Polyvinylalkohol (PVA), einem Weichmacher, einem Salz, und einem nicht wässrigen Lösungsmittel für druckbare Elektronikbauelemente, wobei es sich bei dem Weichmacher um Propylencarbonat (PC), Ethylencarbonat (EC), Dimethylcarbonat (DMC), Ethylenglykol (EG), Diethylenglykol (DEG), Polyethylenglykol (PEG), Propylenglykol (PG) oder einer Mischung aus diesen Substanzen handelt und die nicht wässrige Lösung aus Dimethylsulfoxid (DMSO), n-Methylformamid (NMF) oder Dimethylformamid (DMF) besteht.

2. Verwendung eines festen Kompositpolymerelektrolyten gemäß Anspruch 1, bei dem das Salz aus K⁺, Na⁺, Li⁺, H⁺, Et₄N⁺ und Bt₄N⁺ als Kation, wobei Et Ethyl und Bt Butyl bedeutet, und PF₆⁻, BF₄⁻ und CLO₄⁻ als Anion oder eine Mischung aus diesen Stoffen eingesetzt wird.

3. Verwendung eines festen Kompositpolymerelektrolyten gemäß Anspruch 1 oder 2 mit 0,59 - 20 Gew.% PVA, 1,4 - 31,5 Gew.% PC, 0,01 - 3,5 Gew.% des Salzes und 45 - 98 Gew.% DMSO.

4. Verwendung eines festen Kompositpolymerelektrolyten gemäß Anspruch 3 mit 1,7 -15 Gew.% PVA, 3,2 - 22,5 Gew.% PC, 0,1 - 2,5 Gew.% des Salzes und 60 - 95 Gew.% DMSO.

5. Verwendung eines festen Kompositpolymerelektrolyten gemäß Anspruch 4 mit 2,5 - 5,5 Gew.% PVA, 7 - 13 Gew.% PC, 0,5 -1,5 Gew.% des Salzes und 80 - 90 Gew.% DMSO.

6. Verwendung eines festen Kompositpolymerelektrolyten gemäß einem der Ansprüche 1 - 5 mit einer optischen Transparenz von über 90%.

7. Verwendung eines festen Kompositpolymerelektrolyten gemäß einem der Ansprüche 1 - 6 für das Drucken von Dielektrika in gedruckter, flexibler, biegbarer und transparenter Niederspannungs-elektronikbauelementen.

8. Verwendung eines festen Kompositpolymerelektrolyten gemäß einem der Ansprüche 1 - 7 für das Drucken von Logikschaltungen, Schaltungen, Transistoren und Kondensatoren.

9. Verwendung eines festen Kompositpolymerelektrolyten gemäß einem der Ansprüche 1 - 8 für das Drucken mit einem Tintenstrahldrucker.

10. Druckbares elektronisches Bauelement, herstellbar durch Abscheidung einer Schicht aus einem festen Kompositpolymerelektrolyten umfassend Polyvinylalkohol (PVA), einem Weichmacher, einem Salz und einer nicht wässrigen Lösung für druckbare Elektronik, wobei es sich bei dem Weichmacher um Propylencarbonat (PC), Ethylencarbonat (EC), Dimethylcarbonat (DMC), Ethylenglykol (EG), Diethylenglykol (DEG), Polyethylenglykol (PEG), Propylenglykol (PG) oder einer Mischung aus diesen Substanzen handelt und die nicht wässrige Lösung aus Dimethylsulfoxid (DMSO), n-Methylformamid (NMF) oder Dimethylformamid (DMF) ist.

11. Druckbare Elektronik gemäß Anspruch 10, hergestellt durch Abscheidung einer Schicht aus dem festen Kompositpolymerelektrolyten mittels Tintenstrahl.

12. Druckbare Elektronik gemäß Anspruch 10 oder 11, wobei die Schicht des festen Kompositpolymerelektrolyten zwischen 10 nm und 10 µm stark ist.

13. Druckbare Elektronik gemäß Anspruch 12, wobei der die Schicht des festen Kompositpolymerelektrolyten zwischen 50 nm und 5 µm stark ist.

## Revendications

1. Utilisation d'un électrolyte polymère solide composite comprenant du polyvinyl alcool (PVA), un plastifiant, un sel et un solvant non aqueux pour imprimer des composants électroniques, le plastifiant étant du propylène carbonate (PC) de l'éthylène carbonate (EC), du diméthyl carbonate (DMC), de l'éthylène glycol (EG), du diéthylène glycol (DEG), du polyéthylène glycol (PEG), du polypropylène glycol (PG) ou un mélange de ces composés et le solvant non aqueux étant du dyméthyl sulfoxyde (DMSO), du n-méthyl formamide (NMF) ou du diméthyl formamide (DMF).

2. Utilisation d'un électrolyte polymère solide composite conforme à la revendication 1,
dans lequel
le sel renferme K⁺, Na⁺, Li⁺, H⁺, Et₄N⁺, et Bt₄N⁺, Et représentant un groupe éthyl et Bt représentant un groupe butyl, en tant que cation et PF₆⁻, BF₄⁻, CLO₄⁻ en tant qu'anion, ou un mélange de ces composés.

3. Utilisation d'un électrolyte polymère solide composite conforme à la revendication 1 ou 2 renfermant 0.59 à 20% en poids de PVA, 1,4 à 31,5% en poids de PC, 0,01 à 3,5% en poids de sel et 45 à 98 % en poids de DMSO.

4. Utilisation d'un électrolyte polymère solide composite conforme à la revendication 3 renfermant 1,7 à 15 % en poids de PVA, 3,2 à 22,5 % en poids de PC, 0,1 à 2,5% en poids de sel et 60 à 95% en poids de DMSO.

5. Utilisation d'un électrolyte polymère solide composite conforme à la revendication 4 renfermant 2,5 à 5,5 % en poids dé PVA, 7 à 13% en poids de PC, 0,5 à 1,5 % en poids de sel et 80 à 90% en poids de DMSO.

6. Utilisation d'un électrolyte polymère solide composite conforme à l'une des revendications 1 à 5, manifestant plus de 90% de transparence optique.

7. Utilisation d'un électrolyte polymère solide composite conforme à l'une des revendications 1 à 6, pour imprimer des composants diélectriques dans des composants électroniques imprimés basse tension, flexibles, recourbables et transparents.

8. Utilisation d'un électrolyte polymère solide composite conforme à l'une des revendications 1 à 7, pour imprimer des composants logiques, des circuits, des transistors et des condensateurs.

9. Utilisation d'un électrolyte polymère solide composite conforme à l'une des revendications 1 à 8 pour réaliser une impression avec une imprimeuse à jet d'encre.

10. Composant électronique imprimé pouvant être obtenu par dépôt d'une couche d'un électrolyte polymère solide composite renfermant du polyvinyl alcool (PVA), un plastifiant, un sel et un solvant non aqueux pour effectuer l'impression de composants électroniques, dans lequel le plastifiant est du propylène carbonate (PC), de l'éthylène carbonate (EC), du diméthyl carbonate (DMC), de l'éthylène glycol (EG), du diéthylène glycol (DEG), du polyéthylène glycol (PEG), du propylène glycol (PG) ou un mélange de ces composés et le solvant non aqueux est du diméthyl sulfoxide (DMSO), du n méthyl formamide (NMF), ou du diméthyl formamide (DMF).

11. Composant électronique imprimé conforme à la revendication 10 pouvant être obtenu par dépôt d'une couche de l'électrolyte polymère solide composite au moyen d'un jet d'encre.

12. Composant électronique imprimé conforme à la revendication 10 ou 11, dans lequel la couche de l'électrolyte polymère solide composite a une épaisseur comprise entre 10 nm et 10 µm.

13. Composant électronique imprimé conforme à la revendication 12, dans lequel la couche d'électrolyte polymère solide composite a une épaisseur de 50 nm à 5 µm.
